# EUROPÄISCHE PATENTANMELDUNG

(11) **EP 2 465 896 A1**
(43) Veröffentlichungstag der Anmeldung: **20.06.2012**
(21) Anmeldenummer: 10194965.9
(22) Anmeldetag: 14.12.2010
(51) Int. Cl.: C08K 3/22, C08K 7/14

(54) **Polyester Zusammensetzungen**

(71) Anmelder: LANXESS Deutschland GmbH, 51369 Leverkusen (DE)
(72) Erfinder: Putlowski, Ulrich, 41539 Dormagen (DE); Bienmüller, Matthias, 47803 Krefeld (DE)

(57) **Zusammenfassung**

Die Erfindung betrifft Zusammensetzungen auf Basis von Polyester, Titandioxid und Glasfasern, die Verwendung dieser Zusammensetzungen zur Herstellung kurzzeitwärmeformbeständiger Erzeugnisse sowie ein Verfahren zur Verbesserung der Kurzzeitwärmeformbeständigkeit Polyester-basierter Erzeugnisse insbesondere Polyester-basierter optoelektronischer Erzeugnisse.

## Beschreibung

Die Erfindung betrifft Zusammensetzungen auf Basis von Polyester, Titandioxid und Glasfasern, die Verwendung dieser Zusammensetzungen zur Herstellung kurzzeitwärmeformbeständiger Erzeugnisse sowie ein Verfahren zur Verbesserung der Kurzzeitwärmeformbeständigkeit Polyester-basierter Erzeugnisse insbesondere Polyester-basierter optoelektronischer Erzeugnisse.

Viele elektronische und elektrische Baugruppen und Komponenten umfassen temperaturempfindliche elektrische und/oder elektronische Erzeugnisse, wie z.B. wärmeempfindliche integrierte Schaltkreise, Lithiumbatterien, Oszillatorkristalle, optoelektronische Erzeugnisse. Im Zuge der Montage einer solchen Baugruppe müssen die an den Erzeugnissen vorgesehenen elektrischen Kontakte prozesssicher mit Leiterbahnen einer Platine und/oder mit elektrischen Kontakten anderer Erzeugnisse verbunden werden. Diese Montage erfolgt häufig mit Hilfe eines Lötverfahrens, bei dem am Erzeugnis vorgesehene Lötanschlüsse mit der Platine verlötet werden. Für jedes Erzeugnis ergibt sich dabei ein sicherer Bereich für die Lötzeit und Löttemperatur, in der gute Lötverbindungen hergestellt werden können. Gleichzeitig dürfen die temperaturempfindlichen elektrischen und elektronischen Erzeugnisse nicht zu stark erhitzt werden, um eine dauerhafte Schädigung zu vermeiden. Somit bestehen beim Löten hitzeempfindlicher Erzeugnisse die konträren Anforderungen, einerseits im Bereich der Lötanschlüsse eine ausreichend hohe Löttemperatur zum Löten zu gewährleisten, andererseits aber in den temperaturempfindlichen Bereichen der Erzeugnisse die Temperatur ausreichend so niedrig zu halten, dass keine Schädigungen der Erzeugnisse auftreten.

Um ein gutes Lötergebnis zu erreichen, müssen die Erzeugnisse zur Herstellung von LEDs während des Lötens über längere Zeiten hinweg erhöhten Temperaturen ausgesetzt werden. So wird z.B. beim Wellenlöten das auf die Platine gesteckte Erzeugnis zunächst langsam auf etwa 100 C Grad aufgewärmt. Danach erfolgt die eigentliche Lötung, die typischerweise bei etwa 260 C Grad erfolgt und mindestens 5 Sekunden dauert, gefolgt von der Erstarrungsphase, während das Erzeugnis langsam abkühlt. Um optoelektronische Erzeugnisse während dieses (insgesamt mehrere Minuten dauernden) Lötprozesses effizient gegenüber den dabei auftretenden Temperaturerhöhungen zu schützen, werden gemäß WO 02/074028 A1 die Erzeugnisse während des Lötens mit einer Schutzvorrichtung versehen, die nach Beendigung des Lötprozesses abgenommen wird.

Aus WO 2010/049531 A1 sind sogenannte Power-LEDs auf Basis aromatischer Polyester oder vollständig aromatischer Polyester bekannt, wodurch der Abbau des thermoplastischen Materials durch Hitze oder Strahlung verhindert werden soll. Der Einsatz dieser aromatischen Polyester oder vollständig aromatischen Polyester, insbesondere auf Basis von p-Hydroxbenzoesäure, Terephthalsäure, Hydrochinon oder 4,4'-Bisphenol und gegebenenfalls Isophthalsäure führt zu einer länger anhaltenden Leuchtkraft jener Power-LEDs. Nachteilig an den Polyestern der WO 2010/049531 A1 ist jedoch die hohe Verarbeitungstemperatur in der Schmelze die aufgrund der hohen Schmelzpunkte der beschriebenen Polymere bei Temperaturen von 355°C und höher liegen, ebenso wie die hohen Werkzeugtemperaturen von 175°C und höher.

Es hat sich gezeigt, dass die im Stand der Technik genannten Polyester hinsichtlich ihrer Kurzzeitwärmeformbeständigkeit bzw. Lötbadbeständigkeit zwar hinreichend stabil sein mögen jedoch insbesondere bei Ihrer Verarbeitung in der Schmelze Nachteile zeigen. Die Nachteile liegen darin, dass aufgrund der hohen Schmelzpunkte der im Stand der Technik genannten Polyester sehr hohe Verarbeitungstemperaturen oberhalb der Schmelztemperatur und hohe Werkzeugtemperaturen benötigt werden. Hohe Verarbeitungs- und Werkzeugtemperaturen erfordern speziell und kostenaufwendig ausgerüstete Spritzgussmaschinen insbesondere bei Temperierung und Kühlung der Werkzeuge. Zudem führen hohe Verarbeitungstemperaturen zu erhöhtem Verschleiß der Spritzgusseinheit.

Die Aufgabe der vorliegenden Erfindung besteht deshalb darin, Zusammensetzungen mit optimierten Eigenschaften in Bezug auf Kurzzeitwärmeformbeständigkeit, Reflektion, hoher Oberflächenqualität bei gleichzeitig niedrigen Verarbeitungstemperaturen in der Schmelze zur Verfügung zu stellen.

Zusammensetzungen zur Verfügung zu stellen, die eine ausreichend hohe Kurzzeitwärmeformbeständigkeit aufweisen (diese ist Voraussetzung, um gute Lötergebnisse in nachfolgenden Verarbeitungsschritten zu erhalten) und gleichzeitig niedrige Verarbeitungstemperaturen in der Schmelze (dies führt zu erheblichen Verbesserungen bei der Verarbeitung der Zusammensetzungen) stellt eine besondere technische Herausforderung dar, da beide Eigenschaften an sich konträr laufen. In Kombination mit der Forderung nach optimierten Eigenschaften bezüglich Reflektion und Oberflächenqualität ist die Herausforderung der Aufgabenstellung um so höher einzuschätzen.

Lösung der Aufgabe und Gegenstand der vorliegenden Erfindung sind Zusammensetzungen enthaltend
a) 5 bis 50 Gew.-Teile, bevorzugt 10 bis 40 Gew.-Teile, besonders bevorzugt 13 bis 33 Gew.-Teile Glasfasern,
b) 10 bis 40 Gew.-Teile, bevorzugt 13 bis 33 Gew.-Teile, besonders bevorzugt 18 bis 28 Gew.-Teile Titandioxid mit einer mittleren Teilchengröße zwischen 90 nm und 2000 nm und
c) 20 bis 80 Gew.-Teile, bevorzugt 30 bis 70 Gew.-Teile, besonders bevorzugt 40-60 Gew.-Teile Polethylenterephthalat (PET). In einer bevorzugten Ausführungsform enthalten die erfindungsgemäßen Zusammensetzungen zusätzlich zu a) bis c) noch
d) 0,01 bis 40 Gew.-Teile, bevorzugt 0,01 bis 30 Gew.-Teile, besonders bevorzugt 5 bis 20 Gew.-Teile Polybutylenterephthalat (PBT).
   In einer weiteren bevorzugten Ausführungsform enthalten die erfindungsgemäßen Zusammensetzungen zusätzlich zu a) bis d) oder anstelle von d) zusätzlich zu a) bis c) noch
e) 0,01 bis 15 Gew.-Teile, bevorzugt 0,01 bis 10 Gew.-Teile, besonders bevorzugt 0,01 bis 5 Gew.-Teile Additive, die unterschiedlich zu den unter a) und b) genannten Komponenten sind.

In einer besonders bevorzugten Ausführungsform ist die Summe aller Gew.-Teile 100% und entspricht der Gesamtzusammensetzung der erfindungsgemäßen Formmassen.

Die erfindungsgemäß als Komponente a) einzusetzenden Glasfasern haben im Allgemeinen einen Faserdurchmesser zwischen 7 und 18 µm, bevorzugt zwischen 9 und 15 µm, und werden als Endlosfasern oder als geschnittene oder gemahlene Glasfasern zugesetzt. Die Fasern können mit einem geeigneten Schlichtesystem und einem Haftvermittler bzw. Haftvermittlersystem, bevorzugt auf Silanbasis, ausgerüstet sein.

Gebräuchliche Haftvermittler auf Silanbasis für die Vorbehandlung sind Silanverbindungen der allgemeinen Formel (I)

(X-(CH₂)_{q})k-Si-(O-CrH₂r+1)₄-k (I)

in der die Substituenten folgende Bedeutung haben: 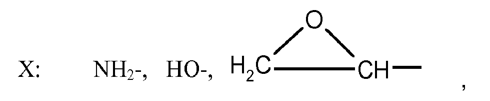
q: eine ganze Zahl von 2 bis 10, bevorzugt 3 bis 4,
r: eine ganze Zahl von 1 bis 5, bevorzugt 1 bis 2,
k: eine ganze Zahl von 1 bis 3, bevorzugt 1.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf die Glasfasern zur Oberflächenbeschichtung eingesetzt.

Die Glasfasern können bedingt durch die Verarbeitung zur Formmasse bzw. Formkörper in der Formmasse bzw. im Formkörper einen kleineren d97- bzw. d50-Wert aufweisen, als die ursprünglich eingesetzten Glasfasern. Die Glasfasern können bedingt durch die Verarbeitung zur Formmasse bzw. Formkörper in der Formmasse bzw. im Formkörper kürzere Längenverteilungen als ursprünglich eingesetzt aufweisen.

Für das erfindungsgemäß als Komponente b) einzusetzende Titandioxid kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als Al₂O₃) und einen Sauerstoffüberschuss in der Gasphase bei der Oxidation des Titantetrachlorids zu Titandioxid von mindestens 2 % ; beim SP-Grundkörper durch eine Dotierung z. B. mit A1, Sb, Nb oder Zn. Besonders bevorzugt, um eine hinreichend hohe Helligkeit zu erhalten, ist eine "leichte" Stabilisierung mit A1 bevorzugt bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron- Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Photoaktivität des Titandioxids dieses anorganisch nachbehandelt, besonders bevorzugt mit Oxiden von Si und / oder A1 und / oder Zr und / oder durch den Einsatz von Sn-Verbindungen.

Bevorzugt ist die Oberfläche von pigmentärem Titandioxid mit amorphen Auffällungen von Oxidhydraten der Verbindungen SiO₂ und / oder Al₂O₃ und / oder Zirkonoxid bedeckt. Die Al₂O₃-Hülle erleichtert die Pigmentdispergierung in der Polymermartrix, die SiO₂-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen. Erfindungsgemäß einzusetzendes Titandioxid weist eine mittlere Teilchengröße zwischen 90 nm und 2000 nm, bevorzugt zwischen 200 nm und 800 nm auf.

Kommerziell erhältliche Produkte sind beispielsweise Kronos® 2230, Kronos® 2225 und Kronos® vlp7000 der Fa. Kronos, Dallas, USA.

Das als Komponente c) bzw. optionale Komponente d) einzusetzende PET bzw. PBT sind Reaktionsstoffe aus aromatischen Dicarbonsäuren oder ihren reaktionsfähigen Derivaten, bevorzugt Dimethylestern oder Anhydriden, und aliphatischen, cycloaliphatischen oder araliphatischen Diolen und Mischungen dieser Reaktionsprodukte.

Sie lassen sich aus Terephthalsäure (oder ihren reaktionsfähigen Derivaten) und den jeweiligen aliphatischen Diolen mit 2 bzw. 4 C-Atomen nach bekannten Methoden herstellen (Kunststoff-Handbuch, Bd. VIII, S. 695 FF, Karl-Hanser-Verlag, München 1973). Es sind also keine aromatischen Polyester im Sinne der WO 2010/049531 A1.

Bevorzugte Polyethylenterephthalate (PET) bzw. Polybutylenterephthalate (PBT) enthalten mindestens 80 Mol-%, vorzugsweise 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykol- oder Butandiol-1,4-reste.

Die bevorzugten Polyethylenterephthalate bzw. Polybutylenterephthalate können neben Terephthalsäureresten bis zu 20 Mol-% Reste anderer aromatische Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, oder Cyclohexandicarbonsäure.

Die bevorzugten Polyethylenterephthalate bzw. Polybutylenterephthalate können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 oder -1,6,2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxyphenyl)-propan (DE-A 24 07 674 (= US 4 035 958), DE-A 24 07 776, DE-A 27 15 932 (=US 4 176 224)).

Die erfindungsgemäß einzusetzenden PET bzw. PBT können durch Einbau relativ kleiner Mengen 3-oder 4-wertiger Alkohole oder 3- oder 4-basischer Carbonsäuren, wie sie z.B. in der DE-A 19 00 270 (= US-A 3 692 744) beschrieben sind, verzweigt werden. Bevorzugte Verzweigungsmittel sind Trimesinsäure, Trimellitsäure, Trimethylolethan und Trimethylolpropan und Pentaerythrit.

Die erfindungsgemäß einzusetzenden PET bzw. PBT besitzen bevorzugt eine intrinsische Viskosität von ca. 0,3 cm³/g bis 1,5 cm³/g, besonders bevorzugt 0,4 cm³/g bis 1,3 cm³/g, insbesonders bevorzugt 0,5 cm³/g bis 1,0 cm³/g jeweils gemessen in Phenol/o-Dichlorbenzol (1:1 Gew.-Teile) bei 25°C.

Die Polyester der Komponente c) PET und der Komponente d) PBT können gegebenenfalls auch im Gemisch mit anderen Polyestern und/oder weiteren Polymeren eingesetzt werden.

Als Komponente e) können die erfindungsgemäßen Zusammensetzungen noch Additive enthalten.

Übliche Additive der Komponente e) sind z.B. Stabilisatoren (zum Beispiel UV-Stabilisatoren, Thermostabilisatoren, Gammastrahlenstabilisatoren), Antistatika, Fließhilfsmittel, Flammschutzmittel, Entformungsmittel, Elastomermodifikatoren, Brandschutzadditive, Emulgatoren, Nukleierungsmittel, Weichmacher, Gleitmittel, Farbstoffe und Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können bevorzugt sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Farbstoffe oder Pigmente können unabhängig von dem Titandioxid der Komponente b) weitere Farbstoffe bzw. Pigmente eingesetzt werden um im Falle eines optoelektronischen Erzeugnisses dem von diesem auszusendendem Licht einen Farbton zu geben oder um das zu emittierende Licht mittels eines optischen Aufhellers zu verbessern.

Als Nukleierungsmittel können bevorzugt Natrium- oder Calciumphenylphosphinat, Aluminiumoxid, Siliziumdioxid sowie bevorzugt Talkum eingesetzt werden.

Als Gleit- und Entformungsmittel können bevorzugt Esterwachse, Pentaeritrytoltetrastearat (PETS), langkettige Fettsäuren, insbesondere Stearinsäure oder Behensäure, deren Salze, insbesondere Ca- oder Zn-Stearat, sowie Amidderivate, insbesondere Ethylen-bis-stearylamid, oder Montanwachse, insbesondere Mischungen aus geradkettigen, gesättigten Carbonsäuren mit Kettenlängen von 28 bis 32 C-Atomen, sowie niedermolekulare Polyethylen- bzw. Polypropylenwachse eingesetzt werden.

Als Weichmacher können bevorzugtl Phthalsäuredioctylester, Phthalsäuredibenzylester, Phthalsäurebutylbenzylester, Kohlenwasserstofföle, N-(n-Butyl)benzolsulfonamid eingesetzt werden.

Als Elastomermodifikatoren einzusetzende Additive können bevorzugt eines oder mehrere Pfropfpolymerisate E von
E. 1 5 bis 95 Gew.-%, vorzugsweise 30 bis 90 Gew.-%, wenigstens eines Vinylmonomeren auf
E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage E.2 hat im Allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere E.1 sind vorzugsweise Gemische aus
E.1.1 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
E.1.2 1 bis 50 Gew.-% Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren einzusetztenden Pfropfpolymerisate geeignete Pfropfgrundlagen E.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist als Pfropfgrundlage E.2. reiner Polybutadienkautschuk.

Besonders bevorzugte Polymerisate E sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt mindestens 30 Gew.-%, vorzugsweise mindestens 40 Gew.-% (in Toluol gemessen).

Die Elastomermodifikatoren bzw. Pfropfcopolymerisate E werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Propfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren sind. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind beispielsweise Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Als Flammschutzmittel einzusetzende Additive können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122 (= CA 2 109 024 A1)) können eingesetzt werden. Als halogenhaltige, insbesondere bromierte und chlorierte Verbindungen seien bevorzugt Ethylen-1,2-bistetrabromphthalimid, epoxidiertes Tetrabrombisphenol 1 A-Harz, Tetrabrombisphenol-A-oligocarbonat, Tetrachlorbisphenol-A-oligocarbonat, Pentabrompolyacrylat, bromiertes Polystyrol. genannt. Als organische Phosphorverbindungen sind die Phosphorverbindungen gemäß WO-A 98/17720 (= US 6 538 024) geeignet, bevorzugt Triphenylphosphat (TPP), Resorcinol-bis-(diphenylphosphat) einschließlich Oligomere (RDP) sowie Bisphenol-A-bis-diphenylphosphat einschließlich Oligomere (BDP), Melaminphosphat, Melaminpyrophosphat, Melaminpolyphosphat und deren Mischungen. Als Stickstoffverbindungen kommen insbesondere Melamin und Melamincyanurat in Frage. Als Synergisten sind bevorzugt Antimonverbindungen, insbesondere Antimontrioxid und Antimonpentoxid, Zinkverbindungen, Zinnverbindungen wie z.B. Zinnstannat und Borate geeignet. Auch können dem Flammschutzmittel sogenannte Kohlenstoffbildner und Tetrafluorethylenpolymerisate zugesetzt werden.

Unabhängig von der Komponente a) können als Additive zusätzliche Füll- und/oder Verstärkungsstoffes in den erfindungsgemäßen Zusammensetzungen enthalten sein.

Es kann aber auch Mischungen aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern enthalten sein. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat oder Bariumsulfat eingesetzt. Besonders bevorzugt werden erfindungsgemäß mineralische teilchenförmige Füllstoffe auf der Basis von Talk, Wollastonit oder Kaolin eingesetzt.

Besonders bevorzugt werden ferner auch nadelförmige mineralische Füllstoffe als Additiv eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm bestimmt mit einem CILAS GRANULOMETER.

Wie bereits oben beschrieben, kann der Füllstoff und/oder Verstärkungsstoff gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich.

Für die Ausrüstung der als Additiv einzusetzenden Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe.

Die vorliegende Erfindung betrifft aber auch die Verwendung der erfindungsgemäßen Zusammensetzungen zur Herstellung kurzzeitwärmeformbeständiger Erzeugnisse, bevorzugt elektronischer und elektronischer Baugruppen und Komponenten, insbesondere bevorzugt optoelektronischer Erzeugnisse.

Die vorliegende Erfindung betrifft aber auch ein Verfahren zur Herstellung von Erzeugnissen, bevorzugt kurzzeitwärmeformbeständiger Erzeugnisse für die Elektro- oder Elektronikindustrie, besonders bevorzugt elektronischer oder elektrischer Baugruppen und Komponenten, wobei das Matrixmaterial durch Spritzguss oder Extrusion, bevorzugt durch Spritzguss erhalten wird.

Die vorliegende Erfindung betrifft aber auch ein Verfahren zur Verbesserung der Kurzzeitwärmeformbeständigkeit Polyester-basierter Erzeugnisse, dadurch gekennzeichnet, dass man durch Spritzguss oder Extrusion Glasfaser-verstärkte, Polyethylenterephthalat-basierte Zusammensetzungen mit Titandioxid mit einer mittleren Teilchengröße zwischen 90 nm und 2000 nm verarbeitet.

Die Verfahren des Spritzgusses sowie der Extrusion thermoplastischer Formmassen ist bekannt.

Erfindungsgemäße Verfahren zur Herstellung von Erzeugnissen durch Extrusion oder Spritzguss arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seite 127-129).

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang, hier ein Polyamid, im Extruder eingesetzt, wobei der Extruder eine Maschine zur Herstellung thermoplastischer Formstücke ist. Man unterscheidet
Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, insbesondere Kurzzeitformbeständige Erzeugnisse, erhältlich durch Extrusion, Profil-Extrusion oder Spritzguss der erfindungsgemäßen Zusammensetzungen.

Die durch die genannten Verfahren erhältlichen Erzeugnisse zeigen überraschenderweise eine hervorragende Kurzzeitwärmebeständigkeit / Lötbandbeständigkeit, zeigen optimierte Eigenschaften in der Reflektion bei 450 nm und einen geringen Verlust dieser Eigenschaft bei Alterung über einen längeren Zeitraum hinweg, eine optimierte Verarbeitbarkeit durch eine hinreichend stabile Schmelze bei niedrigen Schmelztemperaturen im Bereich von 250 bis 275 °C im Vergleich zu Erzeugnissen, die gemäß der Zusammensetzungen aus dem Stand der Technik erhalten werden.

Sie eignen sich deshalb hervorragend für elektrische oder elektronische Erzeugnisse, insbesondere optoelektronische Erzeugnisse wie LEDs oder OLEDs.

Zur Klarstellung sei angemerkt, dass vom Rahmen der Erfindung alle vorstehend aufgeführten, allgemeinen oder in Vorzugsbereichen genannten Definitionen und Parameter in beliebigen Kombinationen von der vorliegenden Erfindung umfasst sind.

### Beispiele

Zur Herstellung der erfindungemäß beschriebenen Zusammensetzungen werden die einzelnen Komponenten in einem Zweiwellenextruder (ZSK 26 Mega Compounder der Fa. Coperion Werner & Pfleiderer (Stuttgart, Deutschland) bei Temperaturen zwischen 260 und 290°C in der Schmelze vermischt, als Strang ausgetragen, bis zur Granulierfähigkeit abgekühlt und granuliert. Vor weiteren Schritten wird das Granulat bei 120°C im Vakuumtrockenschrank für ca. 2h getrocknet.

Die Prüfkörper (Farbmusterplatten 60x40x4 mm) für die in der Tabelle 1 aufgeführten Untersuchungen wurden auf einer handelsüblichen Spritzgießmaschine bei einer Massetemperatur von 260 - 270°C und einer Werkzeugtemperatur von 80-120°C verspritzt:
Test zur Bestimmung der Kurzzeitwärmeformbeständigkeit: Bei diesem Test wird eine zylinderförmige Lötkolbenspitze mit einem Spitzendurchmesser von 1 mm mit einer Rate von 20°C/Minute von 25°C bis 360°C aufgeheizt. Die Lötkolbenspitze wirkt dabei mit einem Gewicht von 1,0 kg auf den 60x40x4 mm-Prüfkörper ein. Die Temperatur, bei der die Lötkolbenspitze 1,5 mm in den Prüfkörper eingedrungen ist wird als Eindringtemperatur bezeichnet. Im Bereich zwischen 350°C und 360°C ist eine sinnvolle Auswertung durch den beschriebenen Temperaturgradienten während der Messung nicht mehr möglich, so dass sich daraus eine maximal auswertbare Temperatur von 350°C ergibt. Alles darüber hinaus ist mit >350°C gekennzeichnet.

Oberfläche: Die Oberfläche wurde begutachtet und visuell eingeschätzt an Prüfkörpern der Dimensionen 60 mm x 40 mm x 4 mm. Entscheidend für die Beurteilung waren die Kriterien Glanz, Glätte, Farbe und einheitliche Struktur der Oberfläche. + bedeutet gegenüber o ein besseres Ergebnis.

Reflexion: Als Wert für die Reflexion wird der Glanzwert bei 450nm, gemäß DIN 5033-4 auf einem Farbmessgerät der Firma Minolta (CM2600D) unter D65-Licht an Prüfkörpern der Dimensionen 60 mm x 40 mm x 4 mm bestimmt.

Reflexionsverlust nach Heißluftalterung: Für die Heißluftalterung werden die Prüfkörper der Dimensionen 60 mm x 40 mm x 4 mm für 14 Tage bei 140°C in einem handelsüblichen Heißluftofen gelagert. Nach der Lagerung werden die Prüfkörper dem Ofen entnommen und nach Abkühlen auf Raumtemperatur wird die Reflexion wie oben beschrieben gemessen und mit dem entsprechenden Reflexions-Wert vor der Lagerung prozentual ins Verhältnis gesetzt.

Verarbeitbarkeit und Entformbarkeit: Die Verarbeit- und Entformbarkeit der erfindungsgemäß eingesetzten Polyester kann an zwei Kenngrößen abgelesen werden, dem Fülldruck beim Spritzgießvorgang und der Entformbarkeit. Je besser die Fließfähigkeit der Formmasse, desto niedriger ist der benötigte Fülldruck beim Spritzgießvorgang und desto besser die Verarbeitbarkeit. Für die Entformbarkeit ist eine schnelle Kristallisation vorteilhaft, um möglichst schnell und ohne Verformung das Erzeugnis aus dem Werkzeug auswerfen zu können. + bedeutet gegenüber o ein besseres Ergebnis.

PBT: Polybutylenterephthalat (Pocan® B 1300, Handelsprodukt der Lanxess Deutschland GmbH, Leverkusen, Deutschland) mit einer intrinsischen Viskosität von ca. 0,93 cm3/g (gemessen in Phenol : 1,2-Dichlorbenzol = 1:1 bei 25°C)

PET: Polyethylenterephthalat (Polyester Chips PET V004, Fa. Invista, Wichita,USA)

GF: Mit silanhaltigen Verbindungen beschlichtete Glasfaser mit einem Durchmesser von 10 µm (CS 7967, Handelsprodukt der Lanxess N.V., Antwerpen, Belgien)

TiO₂: für die Verwendung in Polyestern gebräuchliches anorganisches Titandioxid (z.B. Kronos® 2230 der Fa. Kronos, Dallas, USA)

Sonstiges: weitere für die Verwendung in Polyestern gebräuchliche Additive wie zum Beispiel Entformungsmittel (z.B. Pentaerythrit-tetrastearat (PETS)), Thermostabilisatoren (z.B. auf Basis von Phenylphosphiten) und Nukleierungsmittel (z.B. Talkum [CAS-Nr. 14807-96-6]).

| **Rezepturen** | **Vgl.1** | **Vgl. 2** | **Vgl.3** | **Vgl. 4** | **Bsp. 1** | **Bsp. 2** | **Bsp. 3** | **Bsp. 4** | **Bsp. 5** | **Bsp. 6** |
|---|---|---|---|---|---|---|---|---|---|---|
| PBT | 78,5 | 73,5 | 7 | 58,5 | 10 | 0 | 0 | 0 | 10 | 10 |
| PET | 0 | 0 | 65 | 0 | 48,5 | 58,5 | 53,5 | 48,5 | 48,5 | 43,5 |
| TiO₂ | 0 | 25 | 25 | 20 | 20 | 20 | 20 | 20 | 25 | 20 |
| GF | 20 | 0 | 0 | 20 | 20 | 20 | 25 | 30 | 15 | 25 |
| Sonstiges | 1,5 | 1,5 | 3 | 1,5 | 1,5 | 1,5 | 1,5 | 1,5 | 1,5 | 1,5 |
| | | | | | | | | | | |
| **Messergebnisse** | | | | | | | | | | |
| Reflexion bei 450 nm [%] | 69 | 91 | 92 | 87 | 91 | 90 | 90 | 89 | 90 | 89 |
| Kurzzeitwärmeformbeständigkeit [Eindringtemperatur in °C] | 252 | 237 | 250 | 297 | 324 | >350 | >350 | >350 | 332 | >350 |
| Oberflächenqualität | + | + | + | 0 | + | 0 | 0 | 0 | + | + |
| Verarbeit- und Entformbarkeit | + | + | 0 | + | + | 0 | 0 | 0 | + | + |
| Reflexionsverlust nach Heißluftalterung [%] | 14,7 % | 0,8 % | 2,2% | 4,5 % | 3,2% | 2,0% | 2,8 % | 2,9 % | 2,7 % | - |

Aus der Tabelle wird klar ersichtlich, dass die erfindungsgemäßen Zusammensetzungen neben hohen Reflexionswerten, guten Verarbeitungs- und Entformungsbedingungen, guter Oberflächenqualität und geringem Reflexionsverlust nach Heißluftalterung zusätzlich eine Kurzzeitwärmeformbeständigkeit von mehr als 300°C aufweisen. Und dies bei gleichzeitig niedrigen Verarbeitungstemperaturen in der Schmelze (260 bis 270°C).

## Patentansprüche

1. Zusammensetzungen enthaltend
a) 5 bis 50 Gew.-Teile, bevorzugt 10 bis 40 Gew.-Teile, besonders bevorzugt 13 bis 33 Gew.-Teile Glasfasern,
b) 10 bis 40 Gew.-Teile, bevorzugt 13 bis 33 Gew.-Teile, besonders bevorzugt 18 bis 28 Gew.-Teile Titandioxid mit einer mittleren Teilchengröße zwischen 90 nm und 2000 nm und
c) 20 bis 80 Gew.-Teile, bevorzugt 30 bis 70 Gew.-Teile, besonders bevorzugt 40-60 Gew.-Teile Polethylenterephthalat (PET).

2. Zusammensetzungen gemäß Anspruch 1, **dadurch gekennzeichnet, dass** diese zusätzlich als Komponente d) noch 0,01 bis 40 Gew.-Teile Polybutylenterephthalat enthalten.

3. Zusammensetzungen gemäß der Ansprüche 1 oder 2, **dadurch gekennzeichnet, dass** zusätzlich zu den genannten Komponenten noch e) 0,01 bis 15 Gew.-Teile Additive enthalten sind die unterschiedlich zu den Komponenten a) und b) sind.

4. Zusammensetzungen gemäß der Ansprüche 1 bis 3, **dadurch gekennzeichnet, dass** die Summe aller Gew.-Teile 100% der Gesamtzusammensetzung entspricht.

5. Erzeugnisse erhältlich durch Extrusion oder Spritzguss der Zusammensetzungen gemäß der Ansprüche 1 bis 4.

6. Erzeugnisse gemäß Anspruch 5, **dadurch gekennzeichnet, dass** es sich um Kurzzeitwärmeformbeständige Erzeugnisse für die Elektro- oder Elektronikindustrie handelt.

7. Verwendung der Zusammensetzungen gemäß der Ansprüche 1 bis 4, zur Herstellung kurzzeitwärmeformbeständiger Erzeugnisse für die Elektro- oder Elektronikindustrie.

8. Verwendung gemäß Anspruch 7, **dadurch gekennzeichnet, dass** es sich bei den Erzeugnissen um optoelektronische Erzeugnisse handelt.

9. Verfahren zur Herstellung von Erzeugnissen, **dadurch gekennzeichnet, dass** durch Spritzguss oder Extrusion Glasfaser-verstärkter, Polyethylenterephthalat-basierter Zusammensetzungen mit Titandioxid mit einer mittleren Teilchengröße zwischen 90 nm und 2000 nm deren Kurzzeitwärmeformbeständigkeit verbessert wird.
